# EUROPEAN PATENT APPLICATION

(11) **EP 3 660 760 A1**
(43) Date of publication of application: **03.06.2020**
(21) Application number: 19192599.9
(22) Date of filing: 20.08.2019
(51) Int. Cl.: G06Q 10/08

(54) **ARTICLE MANAGEMENT SYSTEM AND PROGRAM**

(30) Priority: 27.11.2018 JP 2018221636
(71) Applicant: Toshiba Tec Kabushiki Kaisha, 141-8562 Tokyo (JP)
(72) Inventor: TAKAHASHI, Akira, Shinagawa-ku, Tokyo 141-8562 (JP)
(74) Representative: Bandpay & Greuter

(57) **Abstract**

An article-data storing section stores, in association with article information, ID information of a wireless tag and state information indicating a location of an article. A work-data storing section stores, in association with work information, the article information planned to be used. An article-in-use extracting section extracts article information corresponding to designated work information from the article-data storing section. An article-in-use notifying section notifies information corresponding to the extracted article information. A take-out-time-reading instructing section instructs reading of a wireless tag of a notified article. A return-time-reading instructing section instructs reading of a wireless tag of an article to be returned. A state updating section updates, according to whether the reading is instructed by the take-out-time-reading instructing section or the return-time-reading instructing section, state information corresponding to read ID information to state information indicating that the article is being taken out or state information indicating that the article is returned. A shortage notifying section notifies shortage if there is shortage of ID information that should be read.

## Description

### FIELD

Embodiments described herein relate generally to an article management system and a program.

### BACKGROUND

There has been provided a service in which an engineer, who performs maintenance and the like of an apparatus, goes to a setting place of the apparatus from a business base. When going out for work such as maintenance, the engineer carries articles such as tools or components stored in the base. However, in some case, the articles run short in a site or the engineer leaves the articles in the site and returns to the base.

To prevent such a problem, the engineer prepares articles suitable for work content according to knowledge and experience or prepare articles referring to a memorandum in which necessary articles are listed. However, such a method makes it complicated to confirm whether there is no shortage before leaving the base and returning to the base. In particular, if there are a larger number of articles, it is more likely that the engineer leaves the articles behind.

For example, JP-A-2006-139793 (Patent Literature 1), JP-A-2006-252364 (Patent Literature 2), and JP-A-2006-107161 (Patent Literature 3) propose management of tools and the like. However, the management is often unsuitable for the site of the service explained above. There is a demand for a system suitable for the site.

### SUMMARY OF INVENTION

To solve such problem, there is provided an article management system comprising:
a reader configured to read ID information from a wireless tag storing the ID information;
an article-data storing section configured to store, in association with article information, which is information capable of specifying an article, the ID information of the wireless tag attached to the article and state information capable of discriminating whether the article is returned to a predetermined storage place;
a work-data storing section storing, in association with work information, which is information capable of specifying work, the article information of one or more articles used for the work;
an output section configured to notify information to an operator;
an input section configured to receive operation for designating work from the operator;
an article-in-use extracting section configured to extract, from the article-data storing section, the article information associated with the work information corresponding to the designation operation by the operator via the input section;
an article-in-use notifying section configured to inform, with the output section, information corresponding to the article information extracted by the article-in-use extracting section;
a take-out-time-reading instructing section configured to instruct, via the output section, the operator to cause the reader to read the wireless tag attached to the article specified by the article information notified by the article-in-use notifying section;
a return-time-reading instructing section configured to instruct, via the output section, the operator to cause the reader to read the wireless tag attached to the article when returning the article to the storage place;
a state updating section configured to update, according to whether the reading is after the instruction by the take-out-time-reading instructing section or after the instruction by the return-time-reading instructing section, the state information corresponding to the ID information read by the reader to the state information indicating that the article is being taken out or the state information indicating that the article is returned; and
a shortage notifying section configured to notify shortage if the ID information read by the reader according to the instruction by the take-out-time-reading instructing section includes not all of the ID information corresponding to the article information extracted by the article-in-use extracting section and notify shortage if the ID information read by the reader according to the instruction by the return-time-reading instructing section includes not all of the ID information read by the reader according to the instruction by the take-out-time-reading instructing section.

Preferably, the article management system further comprises a feedback-work-data storing section configured to store at least one of additional use information, which is information of an article used for the work other than the article of the article information associated with the work information in the work-data storing section, and nonuse information, which is information concerning the article of the article information associated with the work information in the work-data storing section, the article being not used for the work.

Preferably still, the article management system further comprises:
a feedback-article-data storing section configured to store additional information concerning the article in association with the article information, and
an additional recording section configured to update, according to operation on the input section, the additional information corresponding to the ID information read by the reader after the instruction by the return-time-reading instructing section.

Preferably yet, the feedback-article-data storing section stores, as the additional information, whether the article is in a state requiring maintenance.

Suitably, the article management system further comprises:
a use-history storing section summarizing an operation history of the article information in time series; and
a shortage predicting section configured to predict, referring to the use-history storing section, whether a number of simultaneously operated articles specified by the article information exceeds a number of stocks of the articles.

The invention also relates to an article management method for an article management system including a reader configured to read ID information from a wireless tag storing the ID information, an article-data storing section configured to store, in association with article information, which is information capable of specifying an article, the ID information of the wireless tag attached to the article and state information capable of discriminating whether the article is returned to a predetermined storage place, and a work-data storing section storing, in association with work information, which is information capable of specifying work, the article information of one or more articles used for the work,
the article management method comprising:
extracting, from the article-data storing section, the article information associated with the work information corresponding to the designation operation by the operator;
notifying information corresponding to the article information extracted by the article-in-use extracting section to the operator;
instructing the operator to cause the reader to read the wireless tag attached to the article specified by the article information notified by the article-in-use notifying section;
instructing the operator to cause the reader to read the wireless tag attached to the article when returning the article to the storage place;
updating, according to whether the reading is after the instruction by the take-out-time-reading instructing section or after the instruction by the return-time-reading instructing section, the state information corresponding to the ID information read by the reader to the state information indicating that the article is being taken out or the state information indicating that the article is returned; and
notifying shortage if the ID information read by the reader according to the instruction by the take-out-time-reading instructing section includes not all of the ID information corresponding to the article information extracted by the article-in-use extracting section and notify shortage if the ID information read by the reader according to the instruction by the return-time-reading instructing section includes not all of the ID information read by the reader according to the instruction by the take-out-time-reading instructing section.

Preferably, the article management method further comprises:
storing at least one of additional use information, which is information of an article used for the work other than the article of the article information associated with the work information in the work-data storing section, and nonuse information, which is information concerning the article of the article information associated with the work information in the work-data storing section, the article being not used for the work.

Preferably yet, the article management method further comprises:
storing additional information concerning the article in association with the article information, and
updating, according to operation on the input section, the additional information corresponding to the ID information read by the reader after the instruction by the return-time-reading instructing section.

Preferably still, the additional information is information whether the article is in a state requiring maintenance.

Preferably yet, the article management method further comprises:
summarizing an operation history of the article information in time series; and
predicting, referring to the use-history storing section, whether a number of simultaneously operated articles specified by the article information exceeds a number of stocks of the articles.

The invention also concerns a computer program comprising instructions which, when the program is executed by a computer, cause the computer to carry out the steps of the method described above.

The invention further rerates to a computer-readable medium having stored thereon the computer program described above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating the configuration of an article management system according to an embodiment;
FIG. 2 is a perspective view illustrating a state of reading of an article;
FIG. 3 is a block diagram illustrating the configurations of a terminal and a server;
FIG. 4 is a diagram illustrating content of work data;
FIG. 5 is a diagram illustrating content of article data;
FIG. 6 is a diagram illustrating content of feedback work data;
FIG. 7 is a diagram illustrating feedback article data;
FIG. 8 is a flowchart illustrating a flow of work preparation processing; and
FIG. 9 is a flowchart illustrating a flow of return and recording processing.

### DETAILED DESCRIPTION

An object of embodiments is to improve efficiency of management of articles carried from a base and used in work performed in an apparatus setting place.

An article management system according to an embodiment includes: a reader configured to read ID information from a wireless tag storing the ID information; an article-data storing section configured to store, in association with article information, which is information capable of specifying an article, the ID information of the wireless tag attached to the article and state information capable of discriminating whether the article is returned to a predetermined storage place; a work-data storing section storing, in association with work information, which is information capable of specifying work, the article information of one or more articles used for the work; an output section configured to notify information to an operator; an input section configured to receive operation for designating work from the operator; an article-in-use extracting section configured to extract, from the article-data storing section, the article information associated with the work information corresponding to the designation operation by the operator via the input section; an article-in-use notifying section configured to inform, with the output section, information corresponding to the article information extracted by the article-in-use extracting section; a take-out-time-reading instructing section configured to instruct, via the output section, the operator to cause the reader to read the wireless tag attached to the article specified by the article information notified by the article-in-use notifying section; a return-time-reading instructing section configured to instruct, via the output section, the operator to cause the reader to read the wireless tag attached to the article when returning the article to the storage place; a state updating section configured to update, according to whether the reading is after the instruction by the take-out-time-reading instructing section or after the instruction by the return-time-reading instructing section, the state information corresponding to the ID information read by the reader to the state information indicating that the article is being taken out or the state information indicating that the article is returned; and a shortage notifying section configured to notify shortage if the ID information read by the reader according to the instruction by the take-out-time-reading instructing section includes not all of the ID information corresponding to the article information extracted by the article-in-use extracting section and notify shortage if the ID information read by the reader according to the instruction by the return-time-reading instructing section includes not all of the ID information read by the reader according to the instruction by the take-out-time-reading instructing section.

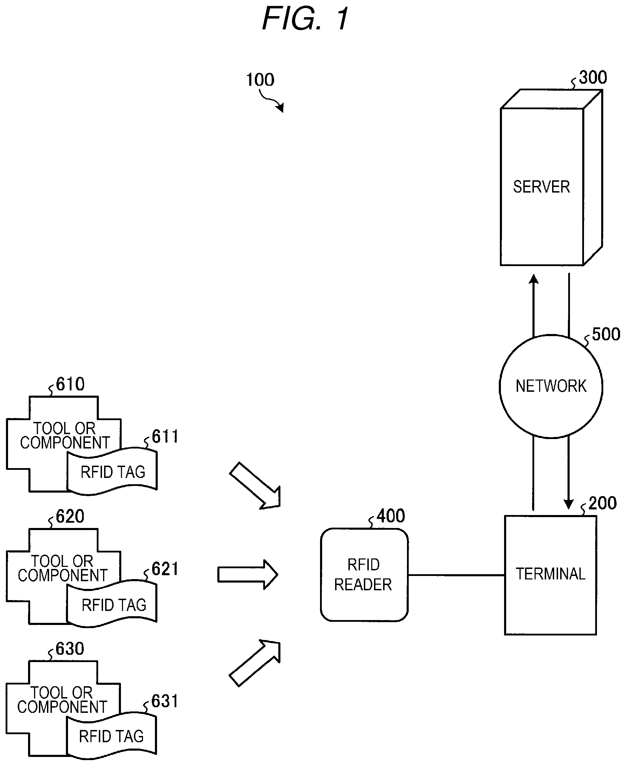

An embodiment is explained with reference to the drawings. FIG. 1 is a diagram illustrating the configuration of an article management system 100 according to this embodiment. The article management system 100 is used for management of articles in a service in which an engineer, who performs maintenance and the like of various apparatuses, goes to a setting place of an apparatus from a business base. The article management system 100 includes a terminal 200, a server 300, and an RFID reader 400.

The terminal 200 is, for example, a PC (Personal Computer) and is operated by an engineer. The terminal 200 performs, for example provision of UIs (User Interfaces) by various functional sections included in the article management system 100.

Not only one engineer operates the terminal 200. In starting operation of the terminal 200, the engineer logs in to the terminal 200 with, for example, a user ID and a password. As the user ID, for example, an employee number may be used. If the employee number can be electronically read from an employee ID card of the engineer by a predetermined reader, the engineer may log in to the terminal 200 according to the reading of the employee ID card by the reader.

Tools or components 610, 620, and 630 are examples of articles. RFID tags 611, 621, and 631 are examples of wireless tags. The RFID tags 611, 621, and 631 accompany (e.g., are attached to) the tools or components 610, 620, and 630. RFID is the abbreviation of Radio Frequency Identification.

The server 300 stores various data used by the article management system 100 and provides the various data to the terminal 200. The RFID reader 400 is an example of a reader that reads information stored by a wireless tag. The RFID reader 400 reads ID information stored by the RFID tags 611, 621, and 631 and outputs the ID information to the terminal 200. Among the various data stored by the server 300, concerning data updated through the terminal 200, a user ID of a user logging in to the terminal 200 is stored as information for specifying an updater.

The server 300 and the terminal 200 are capable of communicating via a network 500. The network 500 is, for example, the Internet or a LAN (Local Area Network).

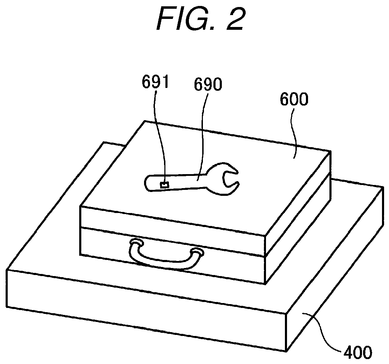

FIG. 2 is a perspective view illustrating a state of reading of a toolbox 600. The tools or components 610, 620, and 630 are stored in the toolbox 600.

An engineer, who goes from a base to a place where a maintenance target apparatus is set, inputs information capable of specifying work to the terminal 200. Then, the terminal 200 notifies the toolbox 600, in which tools or components that should be carried for work are stored, to the engineer with, for example, display on a screen. The engineer takes out the notified toolbox 600 from a warehouse and causes the RFID reader 400 to read the toolbox 600.

The RFID reader 400 reads ID information from the RFID tags 611, 621, and 631 attached to the tools or components 610, 620, and 630 in the toolbox 600 and outputs the ID information to the terminal 200. The terminal 200 collates the ID information with a list of ID information of the RFID tags 611 to 631 accompanying the tools or components 610, 620, and 630 that should be present in the toolbox 600. If there is shortage or inconsistency, the terminal 200 notifies the shortage or the inconsistency to the engineer with, for example, display on the screen.

The terminal 200 leaves, in the server 300, as a record, information indicating that the tools or components 610, 620, and 630 corresponding to the ID information read by the RFID reader 400 are taken out.

If the engineer adds a tool or component 690 other than the toolbox 600, the terminal 200 leaves, in the server 300, as a record, information indicating that the engineer carries the tool or component 690 in performing the work. ID information stored by an RFID tag 691 stuck to the tool or component 690 is used as the record.

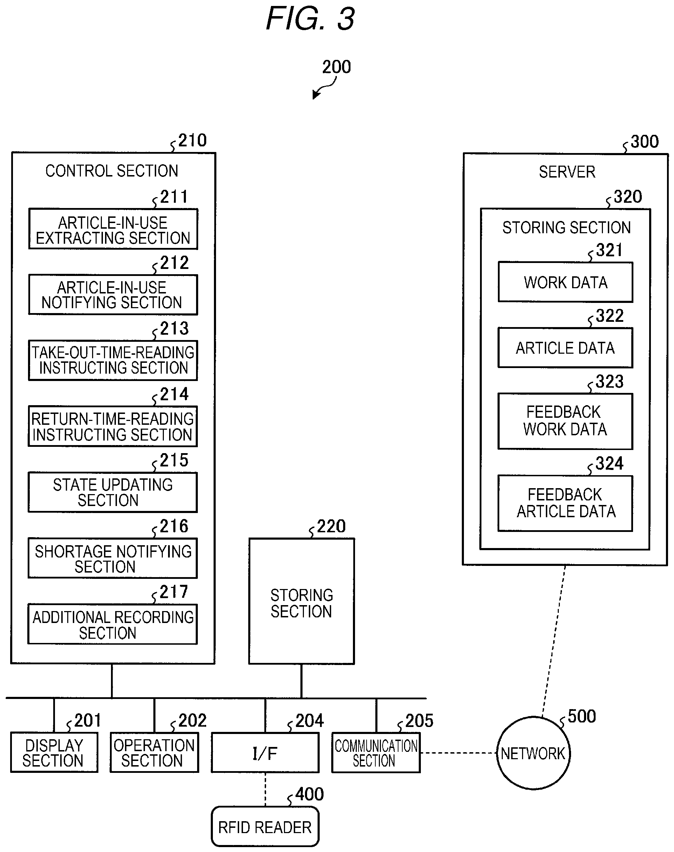

FIG. 3 is a block diagram illustrating the configurations of the terminal 200 and the server 300. The terminal 200 includes a display section 201, an operation section 202, an I/F (Interface) 204, a communication section 205, a control section 210, and a storing section 220. The server 300 includes a storing section 320.

The display section 201 is an example of an output section that notifies information to the operator and is a display device such as a liquid crystal display. The output section may be another information output device such as a printer or a speaker. The operation section 202 is an example of an input section that receives operation for designating work from the operator and is, for example, a keyboard and a mouse or a touch panel that is provided over the display section 201 and receives operation according to display content of the display section 201.

The I/F 204 connects the RFID reader 400 to the terminal 200 and transmits an output of the RFID reader 400 to the control section 210. The communication section 205 connects the terminal 200 to the network 500 and enables the server 300 and the control section 210 to communicate via the network 500.

The control section 210 is a computer component and is configured by a CPU (Central Processing Unit), a ROM (Read Only Memory), a RAM (Random Access Memory), and the like. The ROM is a storage medium that stores various computer programs and data. The RAM is a storage medium that temporarily stores various computer programs and various data. The CPU functions by executing computer programs stored in the ROM or the like and collectively controls the operation of the terminal 200.

The storing section 220 is a storage device such as a HDD (Hard Disk Drive) or an SSD (Solid State Drive). The storing section 220 stores various computer programs executable by the control section 210 (CPU), setting information, and the like.

The storing section 320 of the server 300 is also a storage device such as a HDD (Hard Disk Drive) or an SSD (Solid State Drive). The storing section 320 includes a work-data storing section 321, an article-data storing section 322, a feedback-work-data storing section 323, and a feedback-article-data storing section 324.

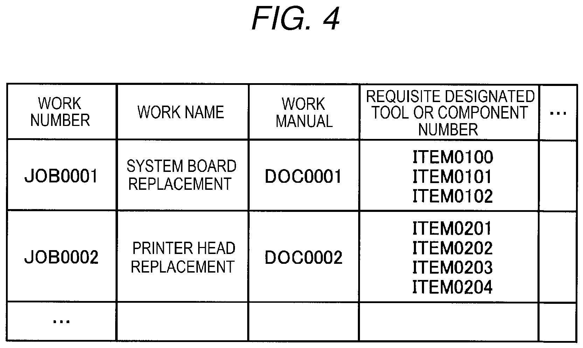

The work-data storing section 321 stores work data. FIG. 4 is a diagram illustrating content of the work data. As an example, the work data in this embodiment is stored in the work-data storing section 321 in a format of a table. Columns forming the work data indicate, for example, a work number, a work name, a work manual, and a requisite designated tool or component number.

The work number is an example of work information, which is information capable of specifying work. The work number is formed by predetermined digits of numbers, alphabets, and the like and allocated to respective kinds of work. The work name is a name clearly representing content of the work such as "system board replacement" or "printer head replacement". The work manual is a number for specifying a document explaining a procedure of the work. The requisite designated tool or component number is a number for specifying tools and components considered necessary for the work. In the work data, one or a plurality of requisite designated tool or component numbers are associated with one work number and stored.

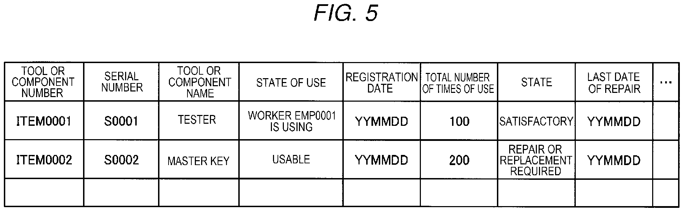

The article-data storing section 322 stores article data. FIG. 5 is a diagram illustrating content of the article data. As an example, the article data in this embodiment is stored in the article-data storing section 322 in a format of a table. Columns forming the article data indicate, for example, a tool or component number, a serial number, a tool or component name, a state of use, a registration date, a total number of times of use, a state, and a last date of repair.

The tool or component number is an example of article information, which is information capable of specifying a tool and a component. The tool or component number is formed by predetermined digits of numbers, alphabets, and the like and respectively allocated to kinds of work. The serial number is ID information stored in an RFID tag accompanying the tool or the component. The tool or component name is a name of the tool or the component such as "tester" or "master key".

The state of use is an example of state information capable of discriminating whether an article is returned to a predetermined storage place. The state of use indicates whether the article is taken out by the engineer and is unusable or whether the article is present in a warehouse and is useable. The registration date is a date of a day when data of the tool or the component is stored in the article-data storing section 322. The total number of times of use is the number of times the tool or the component is taken out. The state is for notifying a state of the tool or the component such as "satisfactory" or "repair or replacement required". The last date of repair is a date of a day when the tool or the component is repaired last.

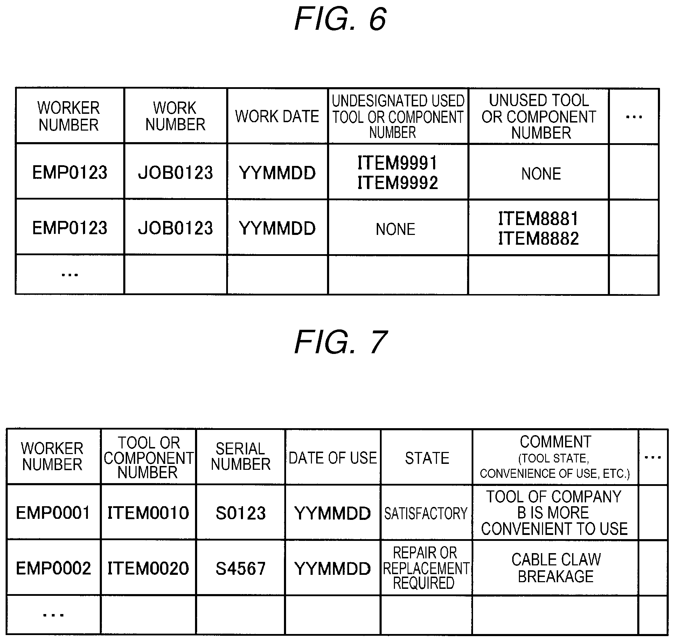

The feedback-work-data storing section 323 stores feedback work data. FIG. 6 is a diagram illustrating content of the feedback work data. As an example, the feedback work data in this embodiment is stored in the feedback-work-data storing section 323 in a format of a table. Columns forming the feedback work data indicate, for example, a worker number, a work number, a work date, an undesignated used tool or component number, an unused tool or component number.

The worker number is a number capable of specifying an engineer who performs work. In this embodiment, the worker number is a user ID of an engineer in logging in to the terminal 200. The work number is the same as the work number in the work data illustrated in FIG. 4 and is a number capable of specifying the work. The work date is a date of a day when the work is performed. One record of the feedback work data is specified by the worker number, the work number, and the work date.

The undesignated used tool or component number is an example of additional use information, which is information concerning articles used in the work other than articles of article information associated with work information in the work-data storing section 321. The undesignated used tool or component number is a number not included in the requisite designated tool or component number of the work data illustrated in FIG. 4 among tools and components used for the work by the engineer.

The unused tool or component number is an example of nonuse information, which is information concerning articles of the article information associated with the work information in the work-data storing section 321, the articles being not used for the work. The unused tool or component number is a number of an article not used in the work by the engineer among the articles in the requisite designated tool or component number of the work data illustrated in FIG. 4.

The feedback-article-data storing section 324 stores feedback article data. FIG. 7 is a diagram illustrating the feedback article data. As an example, the feedback article data in this embodiment is stored in the feedback-article-data storing section 324 in a format of a table. Columns forming the feedback article data indicate, for example, a worker number, a tool or component number, a serial number, a date of use, a state, and a comment.

The worker number is a number (a user ID) capable of specifying an engineer who inputs the data. The tool or component number is a number for specifying a tool or a component. The serial number is ID information stored in an RFID tag accompanying the tool or the component. The date of use is a date of a day when the engineer uses the tool or the component. One record of the feedback article data is specified by the worker number, the serial number, and the date of use.

The state is an example of additional information concerning an article and is information for notifying a state of the tool or the component (whether the article is in a state requiring maintenance) such as "satisfactory" or "repair or replacement required". The comment is another example of the additional information concerning the article and is, for example, a state and convenience of use of the tool in an opinion or a comment concerning the tool or the component input by the engineer after the work.

Referring back to FIG. 3, the CPU reads out and executes computer programs stored in the storing section 220 and the ROM, whereby the control section 210 of the terminal 200 realizes various functional sections. The control section 210 includes, as the functional sections, an article-in-use extracting section 211, an article-in-use notifying section 212, a take-out-time-reading instructing section 213, a return-time-reading instructing section 214, a state updating section 215, a shortage notifying section 216, and an additional recording section 217.

The article-in-use extracting section 211 receives operation for designating work from the engineer via the operation section 202 and extracts, from the article-data storing section 322, requisite designated tool or component numbers (article information) associated with a work number (work information) corresponding to the operation. The article-in-use notifying section 212 notifies information corresponding to the requisite designated tool or component numbers extracted by the article-in-use extracting section 211. More specifically, the article-in-use notifying section 212 displays, for example, on the display section 201, requisite designated tool or component numbers, names of articles of the numbers, and the like, for example, as a list.

The take-out-time-reading instructing section 213 instructs the operator (the engineer), for example, via the display section 201, to cause the RFID reader 400 to read RFID tags attached to articles specified by the article information notified by the article-in-use notifying section 212.

The return-time-reading instructing section 214 instructs the operator (the engineer), for example, via the display section 201, to cause the RFID reader 400 to read RFID tags attached to articles when returning the articles to a storage place (a warehouse).

The state updating section 215 updates, according to whether the reading is after the instruction by the take-out-time-reading instructing section 213 or after the instruction by the return-time-reading instructing section 214, a state of use (state information) corresponding to serial numbers (ID numbers) read by the RFID reader 400 to a state indicating that the article is being taken out or a state indicating that is returned.

That is, if the reading by the RFID reader 400 is performed after the instruction by the take-out-time-reading instructing section 213, the state updating section 215 updates a state of use in article data corresponding to the read serial numbers to a state of use including a number (a worker number) for specifying an engineer taking out the article and description such as "in use".

If the reading by the RFID reader 400 is performed after the instruction by the return-time-reading instructing section 214, the state updating section 215 updates the state of use in the article data corresponding to the read serial numbers to, for example, "usable" or "returned".

The shortage notifying section 216 notifies shortage if the serial numbers read by the RFID reader 400 according to the instruction by the take-out-time-reading instructing section 213 include not all of serial numbers corresponding to the tool or component numbers extracted by the article-in-use extracting section 211.

The shortage notifying section 216 notifies shortage if the serial numbers read by the RFID reader 400 according to the instruction by the return-time-reading instructing section 214 include not all of the serial numbers at the time of taking out the articles, that is, at the time of reading by the RFID reader 400 according to the instruction.

The additional recording section 217 updates the feedback-work-data storing section 323 when articles are taken out. That is, the additional recording section 217 records, as feedback work data, indication to the effect that the engineer does not carry, for the work, articles corresponding to serial number not read by the RFID readers 400 among articles designated by work data. Further, the additional recording section 217 records, as feedback work data, indication to the effect that the engineer carries, for the work, articles corresponding to the serial numbers read by the RFID reader 400 other than the articles designated by the work data.

The additional recording section 217 updates the feedback-article-data storing section 324 according to operation on the operation section 202 when articles are returned. That is, the additional recording section 217 records, as feedback article data, information (states (satisfactory and repair and replacement required) and comments (tool states, convenience of use, etc.)) concerning articles corresponding to the serial numbers read by the RFID reader 400.

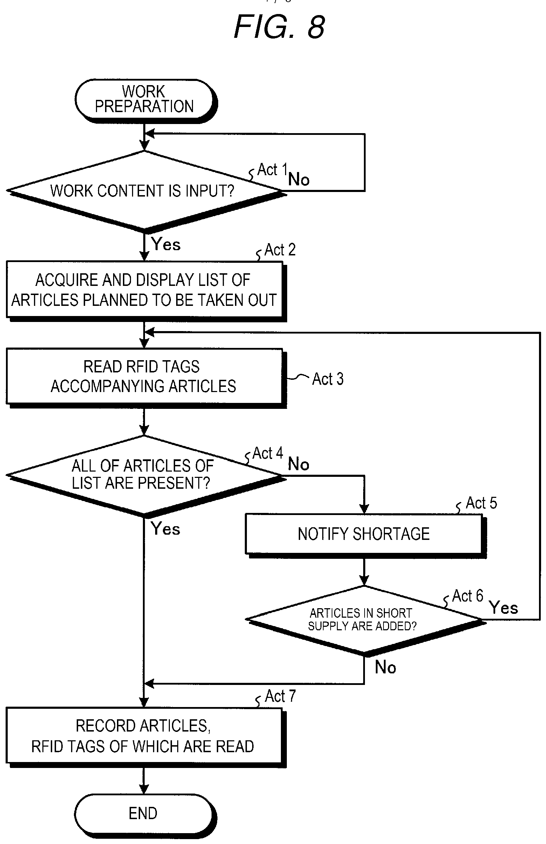

FIG. 8 is a flowchart illustrating a flow of work preparation processing executed by the control section 210. This processing is processing executed when an engineer about to go to a setting place of a maintenance target apparatus in a service such as maintenance prepares tools and components carried for the maintenance. The control section 210 provides a UI for receiving designation of work to an operator logging in to the terminal 200 (i.e., an engineer who is a worker performing work) and receives designation of work via the UI (Act 1).

Although not illustrated in FIG. 8, as the UI, for example, a UI is conceivable that receives, from the engineer, in the operation section 202, an input of a keyword that associates with content of the work about to be performed, lists work names matching the keyword and retrieved and extracted from the work-data storing section 321 and shows the list to the engineer on the display section 201, and receives, from the engineer, operation for selecting one work name from the list with the operation section 202.

In Act 1, the control section 210 stands by for an input of work content (No in Act 1). If work content is input in Act 1 (Yes in Act 1), the control section 210 advances the processing to Act 2, acquires a list of articles planned to be taken out (the article-in-use extracting section 211) and displays the list (the article-in-use notifying section 212). At the same time, the control section 210 instructs the engineer to place the articles shown in the list on the RFID reader 400 (the take-out-time-reading instructing section 213).

Subsequently, the control section 210 advances the processing to Act 3 and reads the RFID tags 611, 621, and 631 accompanying the articles (tools or components) 610, 620, and 630 with the RFID reader 400. This is executed by, for example, placing the toolbox 600, which is notified by the terminal 200 as storing tools and components matching work content, on the RFID reader 400, for example, as illustrated in FIG. 2.

Subsequently, the control section 210 advances the processing to Act 4 and determines whether all of the articles of the list are present. If not all of the articles of the list are present (No in Act 4), the control section 210 advances the processing to Act 5 and notifies shortage to the engineer via the display section 201 (the shortage notifying section 216). In notifying the shortage, the control section 210 may cause the display section 201 to display articles in short supply as a list or may process the list displayed in Act 2 (color-code the list or add signs to the list).

Subsequently, the control section 210 inquires the engineer whether the articles in short supply are added (Act 6). If the engineer replies in Act 6 using the operation section 202 that the articles in short supply are added (Yes in Act 6), the control section 210 returns the processing to Act 3.

In Act 6, if the articles in short supply are unnecessary, the engineer can also replay using the operation section 202 that the articles in short supply are not added. In that case (No in Act 6), the control section 210 advance the processing to Act 7. If all the articles of the list are present in Act 4 (Yes in Act 4), the control section 210 also advances the processing to Act 7.

In Act 7, the control section 210 updates the article-data storing section 322 and updates a state of use in article data corresponding to the serial numbers read in Act 3 to a state of use including a user ID (a worker number) and description such as "in use" (the state updating section 215). Alternatively, for convenience, the control section 210 may determine with only the description of the user ID that the article data is in use. The article data to be updated does not always coincide with the article data in the list displayed in Act 2 and is more or less than the article data in the list according to articles actually taken out from the warehouse.

Further, in Act 7, the control section 210 functions as the additional recording section 217 and updates the feedback-work-data storing section 323. That is, the control section 210 adds, to the feedback-work-data storing section 323, a record for recording to the effect that the engineer does not carry, for the work, articles corresponding to the serial numbers not read by the RFID reader 400 in Act 3 among the articles included in the list in Act 2 and the engineer carries, for the work, articles corresponding to the serial numbers read by the RFID reader 400 in Act 3 among the articles included in the list in Act 2.

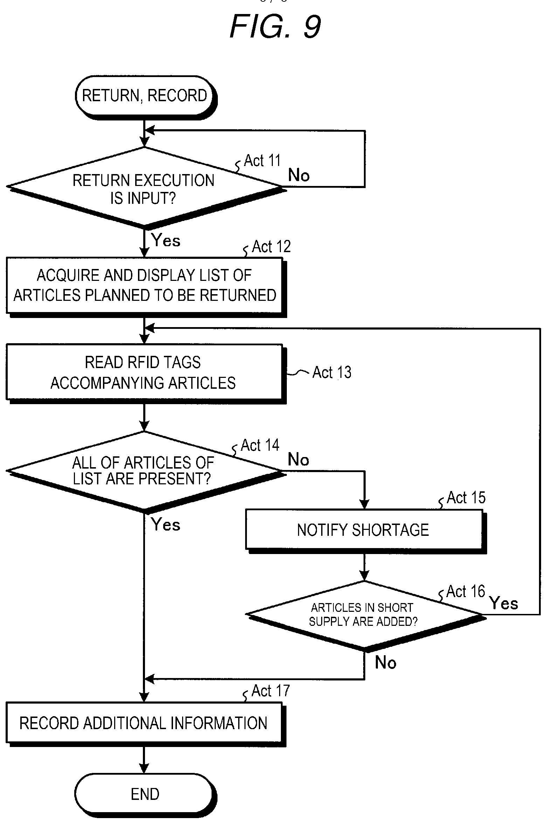

FIG. 9 is a flowchart illustrating a flow of return and recording processing executed by the control section 210. This processing is processing executed when the engineer returning from work such as maintenance returns tools and components carried for the work. The control section 210 provides, to the operator logging in to the terminal 200 (i.e., the engineer who is the worker performing the work), a UI for receiving operation for declaring that return of articles is performed and receives operation via the UI (Act 11).

As the UI in Act 11, for example, a UI is conceivable in which a button for receiving operation for declaring that return of articles is performed is provided in the UI shown in Act 1 in FIG. 8 for the engineer who performs user authentication.

In Act 11, the control section 210 stands by for operation (No in Act 11). If declaration of return execution of articles is input in Act 11 (Yes in Act 11), the control section 210 advances the processing to Act 12, acquires a list of articles planned to be returned, and displays the list. Articles to be displayed in the list can be acquired by extracting a record including a user ID of the engineer in the state of use of the article-data storing section 322. The control section 210 instructs, in addition to the list display, the engineer to place the articles shown in the list on the RFID reader 400 (the return-time-reading instructing section 214).

Subsequently, the control section 210 advances the processing to Act 13 and reads, with the RFID reader 400, the RFID tags 611, 621, and 631 accompanying the articles (tools or components) 610, 620, and 630. This is executed by placing the toolbox 600, which is notified by the terminal 200 as storing tools and components matching work content, on the RFID reader 400, for example, as illustrated in FIG. 2.

Subsequently, the control section 210 advances the processing to Act 14 and determines whether all of the articles of the list are present. If not all of the articles of the list are present (No in Act 14), the control section 210 advances the processing to Act 15 and notifies shortage to the engineer via the display section 201 (the shortage notifying section 216). In notifying the shortage, the control section 210 may cause the display section 201 to display articles in short supply as a list or may process the list displayed in Act 12 (color-code the list or add signs to the list).

Subsequently, the control section 210 inquires the engineer whether the articles in short supply are added (Act 16). If the engineer replies in Act 16 using the operation section 202 that the articles in short supply are added (Yes in Act 16), the control section 210 returns the processing to Act 13.

In Act 16, if the engineer does not return the articles in short supply, the engineer can also reply that the articles in short supply are not added. In that case (No in Act 16), the control section 210 advances the processing to Act 17. If all the articles of the list are present in Act 14 (Yes in Act 14), the control section 210 also advances the processing to Act 17.

In Act 17, the control section 210 updates a state of use of article data corresponding to the serial numbers read in Act 13 to "usable", "returned", or the like (the state updating section 215). The article data to be updated does not always coincide with the article data in the list displayed in Act 12 and is more or less than the article data in the list according to articles actually returned to the warehouse.

Further, in Act 17, the control section 210 functions as the additional recording section 217 and updates the feedback-article-data storing section 324 according to operation on the operation section 202. That is, the control section 210 adds, to the feedback-article-data storing section 324, a record including additional information concerning articles corresponding to the serial numbers read by the RFID reader 400 in Act 13. Examples of the additional information include a state (satisfactory and repair and replacement required) of tools and a comment (a specific state, convenience of use, etc.) concerning tools and components.

If information to the effect that repair or replacement is necessary is recorded in Act 17, the control section 210 quickly notifies the information to a predetermined department or the like. Further, the control section 210 reflects the "state" (see FIG. 7) of the feedback-article-data storing section 324 on the "state" (see FIG. 5) of the article-data storing section 322. If information concerning convenience of use is recorded, the control section 210 enables the record to be referred to in, for example, the list display in Act 2.

In such a configuration, when going to a maintenance service, first, the engineer operates the operation section 202 of the terminal 200 and logs in to the terminal 200. Then, the terminal 200 causes the display section 201 to display a UI. Therefore, the engineer inputs, from the UI, work to be performed in maintenance. Then, the terminal 200 displays a list of articles and urges the RFID reader 400 to read RFID tags. In response to this, the engineer places articles (the toolbox 600 and the article 690) taken out from the warehouse on the RFID reader 400. If not all of the articles of the list are present, the terminal 200 notifies articles in short supply to the engineer. The engineer adds the articles in short supply if the articles in short supply are necessary or directly goes to the maintenance if the articles in short supply are unnecessary. The terminal 200 records in the server 300 that the engineer carries the articles recognized by the RFID reader 400.

When returning from the maintenance service, the engineer operates the operation section 202 of the terminal 200 and logs in to the terminal 200. The terminal 200 determines from the record of the server 300 whether the logging-in engineer is taking out articles. If the engineer is taking out articles, the terminal 200 includes a button for receiving return in the UI displayed on the display section 201. If the button is operated, the terminal 200 displays a list of the articles being taken out by the engineer and urges the RFID reader 400 to read RFID tags. In response to this, the engineer places the carried-back articles (the toolbox 600 and the article 690) on the RFID reader 400. If not all of the articles of the list are present, the terminal 200 notifies articles in short supply to the engineer. The engineer adds the articles in short supply if the articles in short supply can be returned and notifies from the operation section 202 that the articles in short supply are not added if the articles in short supply cannot be returned (for example, out of order or broken or left in a maintenance site). The engineer records, in the server 300, additional information concerning the articles carried for the maintenance.

As explained above, according to this embodiment, it is possible to easily confirm whether articles such as tools and components used for work performed in a setting site of an apparatus are included in carried baggage. Concerning articles that are intentionally not carried, it is possible to record to that the articles are not carried. If articles not included in an article group considered that the engineer should carry for the work and listed are carried, it is possible to record that the articles are carried for the work.

Further, according to this embodiment, it is possible to record that carried articles are carried back. It is possible to record articles that are carried but not returned. Further, it is possible to record additional information concerning the carried articles. It is possible to refer to the record in the next work.

Tools are sometimes out of order or broken and need to be repaired or replaced. It is possible to readily share such information. Since the articles are recorded when the articles are returned, it is possible to keep the return of the articles in the record while memory of the engineer is fresh. It is possible to prevent omission of records.

In this embodiment, the toolbox 600 is not a management target. RFID tags accompanying articles stored in the toolbox 600 are read to manage the articles. However, not only this, but, in implementation, for example, an RFID tag may be stuck to the toolbox 600 to treat the toolbox 600 as a management target article.

In this embodiment, for convenience of explanation, the RFID reader 400 is illustrated in FIG. 2 as having a shape on which the toolbox 600 is placed. However, not only this, but, in implementation, the RFID reader 400 may have any form. There have been RFID readers of various forms such as a handy type and a box type.

### Modification

This modification is a modification of the embodiment. Therefore, the same reference numerals and signs are used for the same components. Detailed explanation of the components is omitted.

The storing section 320 of the server 300 includes a use-history storing section that store a use history. The use history is an operation history of article information summarized in time series.

The control section 210 of the terminal 200 includes a shortage predicting section. The shortage predicting section refers to the operation history stored by the use-history storing section and predicts whether the number of simultaneously operated articles of the same type (having the same tool or component number) exceeds the number of stocks of the articles. If predicting that the number of simultaneously operated articles of the same type exceeds the number of stocks, the shortage predicting section causes the display section 201 of the terminal 200 to display to that effect and urges the engineer to supply the articles.

According to such a modification, operation states of frequently used articles can be grasped. Therefore, it is possible to prevent occurrence of inconvenience in that, if the engineer attempts to use a certain article, the article is used for other work and all stocks of the article are taken out and cannot be used.

The article management system 100 according to this embodiment includes a control device such as a CPU, storage devices such as a ROM (Read Only Memory) and a RAM, external storage devices such as a HDD and a CD drive device, a display device such as a display, and input devices such as a keyboard and a mouse. The article management system 100 has a hardware configuration that makes use of a normal computer.

Computer programs executed in the article management system 100 according to this embodiment are provided while being recorded in a computer-readable recording medium such as a CD-ROM, a flexible disk (FD), a CD-R, or a DVD (Digital Versatile Disk) as a file in an installable form or an executable form.

The computer programs executed in the article management system 100 according to this embodiment may be stored on a computer connected to a network such as the Internet and provided by being downloaded through the network. The computer programs executed in the article management system 100 according to this embodiment may be provided or distributed through the network such as the Internet. The computer programs in this embodiment may be incorporated in a ROM or the like and provided.

The computer programs executed in the article management system 100 according to this embodiment have a module configuration including the sections explained above (the article-in-use extracting section 211, the article-in-use notifying section 212, the take-out-time-reading instructing section 213, the return-time-reading instructing section 214, the state updating section 215, the shortage notifying section 216, and the additional recording section 217). The CPU (the processor) reads out the computer programs from the storage devices and executes the computer programs to thereby load the sections onto a main storage device. Consequently, the article-in-use extracting section 211, the article-in-use notifying section 212, the take-out-time-reading instructing section 213, the return-time-reading instructing section 214, the state updating section 215, the shortage notifying section 216, and the additional recording section 217 are generated on the main storage device.

The several embodiments are explained above. However, the embodiments are presented as examples and are not intended to limit the scope of the invention. These new embodiments can be implemented in other various forms. Various omissions, substitutions, and changes can be made without departing from the scope of the invention. These embodiments and modifications of the embodiments are included in the scope and the gist of the invention and included in the inventions described in claims and the scope of equivalents of the inventions.

## Claims

1. An article management system comprising:
a reader configured to read ID information from a wireless tag storing the ID information;
an article-data storing section configured to store, in association with article information, which is information capable of specifying an article, the ID information of the wireless tag attached to the article and state information capable of discriminating whether the article is returned to a predetermined storage place;
a work-data storing section storing, in association with work information, which is information capable of specifying work, the article information of one or more articles used for the work;
an output section configured to notify information to an operator;
an input section configured to receive operation for designating work from the operator;
an article-in-use extracting section configured to extract, from the article-data storing section, the article information associated with the work information corresponding to the designation operation by the operator via the input section;
an article-in-use notifying section configured to inform, with the output section, information corresponding to the article information extracted by the article-in-use extracting section;
a take-out-time-reading instructing section configured to instruct, via the output section, the operator to cause the reader to read the wireless tag attached to the article specified by the article information notified by the article-in-use notifying section;
a return-time-reading instructing section configured to instruct, via the output section, the operator to cause the reader to read the wireless tag attached to the article when returning the article to the storage place;
a state updating section configured to update, according to whether the reading is after the instruction by the take-out-time-reading instructing section or after the instruction by the return-time-reading instructing section, the state information corresponding to the ID information read by the reader to the state information indicating that the article is being taken out or the state information indicating that the article is returned; and
a shortage notifying section configured to notify shortage if the ID information read by the reader according to the instruction by the take-out-time-reading instructing section includes not all of the ID information corresponding to the article information extracted by the article-in-use extracting section and notify shortage if the ID information read by the reader according to the instruction by the return-time-reading instructing section includes not all of the ID information read by the reader according to the instruction by the take-out-time-reading instructing section.

2. The article management system according to claim 1, further comprising a feedback-work-data storing section configured to store at least one of additional use information, which is information of an article used for the work other than the article of the article information associated with the work information in the work-data storing section, and nonuse information, which is information concerning the article of the article information associated with the work information in the work-data storing section, the article being not used for the work.

3. The article management system according to claim 1 or 2, further comprising:
a feedback-article-data storing section configured to store additional information concerning the article in association with the article information, and
an additional recording section configured to update, according to operation on the input section, the additional information corresponding to the ID information read by the reader after the instruction by the return-time-reading instructing section.

4. The article management system according to claim 3, wherein the feedback-article-data storing section stores, as the additional information, whether the article is in a state requiring maintenance.

5. The article management system according to any one of claims 1 to 4, further comprising:
a use-history storing section summarizing an operation history of the article information in time series; and
a shortage predicting section configured to predict, referring to the use-history storing section, whether a number of simultaneously operated articles specified by the article information exceeds a number of stocks of the articles.

6. An article management method for an article management system including a reader configured to read ID information from a wireless tag storing the ID information, an article-data storing section configured to store, in association with article information, which is information capable of specifying an article, the ID information of the wireless tag attached to the article and state information capable of discriminating whether the article is returned to a predetermined storage place, and a work-data storing section storing, in association with work information, which is information capable of specifying work, the article information of one or more articles used for the work,
the article management method comprising:
extracting, from the article-data storing section, the article information associated with the work information corresponding to the designation operation by the operator;
notifying information corresponding to the article information extracted by the article-in-use extracting section to the operator;
instructing the operator to cause the reader to read the wireless tag attached to the article specified by the article information notified by the article-in-use notifying section;
instructing the operator to cause the reader to read the wireless tag attached to the article when returning the article to the storage place;
updating, according to whether the reading is after the instruction by the take-out-time-reading instructing section or after the instruction by the return-time-reading instructing section, the state information corresponding to the ID information read by the reader to the state information indicating that the article is being taken out or the state information indicating that the article is returned; and
notifying shortage if the ID information read by the reader according to the instruction by the take-out-time-reading instructing section includes not all of the ID information corresponding to the article information extracted by the article-in-use extracting section and notify shortage if the ID information read by the reader according to the instruction by the return-time-reading instructing section includes not all of the ID information read by the reader according to the instruction by the take-out-time-reading instructing section.

7. The article management method according to claim 6, further comprising:
storing at least one of additional use information, which is information of an article used for the work other than the article of the article information associated with the work information in the work-data storing section, and nonuse information, which is information concerning the article of the article information associated with the work information in the work-data storing section, the article being not used for the work.

8. The article management method according to claim 6 or 7, further comprising:
storing additional information concerning the article in association with the article information, and
updating, according to operation on the input section, the additional information corresponding to the ID information read by the reader after the instruction by the return-time-reading instructing section.

9. The article management method according to claim 8, wherein the additional information is information whether the article is in a state requiring maintenance.

10. The article management method according to any one of claims 6 to 9, further comprising:
summarizing an operation history of the article information in time series; and
predicting, referring to the use-history storing section, whether a number of simultaneously operated articles specified by the article information exceeds a number of stocks of the articles.

11. A computer program comprising instructions which, when the program is executed by a computer, cause the computer to carry out the steps of the method according to any one of claims 6 to 10.

12. A computer-readable medium having stored thereon the computer program of claim 11.
